# EUROPÄISCHE PATENTANMELDUNG

(11) **EP 0 923 228 A2**
(43) Veröffentlichungstag der Anmeldung: **16.06.1999**
(21) Anmeldenummer: 98440275.0
(22) Anmeldetag: 30.11.1998
(51) Int. Cl.: H04N 1/327

(54) **Umschalteinrichtung zum Umschalten zwischen einem Telephongerät und einem Zusatzgerät, sowie Anrufbeantworter und Faxweiche mit einer solchen Umschalteinrichtung**

(30) Priorität: 02.12.1997 DE 19753415
(71) Anmelder: ALCATEL, 75008 Paris (FR)
(72) Erfinder: Reher, Norbert, 70806 Kornwestheim (DE)
(74) Vertreter: Brose, Gerhard, Dipl.-Ing.

(57) **Zusammenfassung**

Die Erfindung betrifft eine Umschalteinrichtung(UE) zum Umschalten zwischen einem Telephongerät(Tel) und einem Zusatzgerät(Fax), mit einem Schalter zum Unterdrücken ankommender Rufe für das Telephongerät und damit zum Unterdrücken des Klingelns, bei der der Schalter derart einstellbar ist, daß ab einer vorbestimmten Zeit ankommende Rufe nicht mehr unterdrückt werden, sowie einen Anrufbeantworter und eine Faxweiche mit einer solchen Umschalteinrichtung.

## Beschreibung

Die Erfindung betrifft eine Umschalteinrichtung zum Umschalten zwischen einem Telephongerät und einem Zusatzgerät, nach dem Oberbegriff des Anspruchs 1, einen Anrufbeantworter nach dem Oberbegriff des Anspruchs 5 und eine Faxweiche nach dem Oberbegriff des Anspruchs 7.

Insbesondere für Privathaushalte und kleinere Büros gedacht sind Einrichtungen, mit denen an ein und derselben Telephon-Anschlußleitung außer einem Telephon noch ein Zusatzgerät betrieben werden kann. Als solches Zusatzgerät kommt vor allem ein Anrufbeantworter oder ein Faxgerät in Frage. Da in solchen Fällen die unmittelbare Erreichbarkeit des Angerufenen nicht erforderlich ist, erfolgen Rufe an ein solches Zusatzgerät oft zu unerwünschten Zeiten, insbesondere bei Nacht. Dies wird durch die Gebührengestaltung noch gefördert.

Da weder im Falle eines Anrufbeantworters die unmittelbare Entgegennahme durch den Inhaber, noch im Falle des Faxgeräts von vornherein ein das Telephongerät betreffender Anruf ausgeschlossen werden kann, bleibt das Telephongerät grundsätzlich empfangsbereit. Häufig ist jedoch ein Schalter angebracht, mit dem entweder ankommende Rufe für das Telephongerät oder auch das Klingeln desselben unterdrückt werden kann.

Sowohl, was die Problemstellung, als auch was die Lösung betrifft, ist es grundsätzlich gleichgültig, ob hier eine separate Umschalteinrichtung zum Anschluß sowohl des Telephongeräts als auch des Zusatzgeräts vorhanden ist, oder ob die Umschalteinrichtung in das Zusatzgerät integriert ist oder ob alle drei Teile integriert sind.

Dabei ergibt sich das ganz menschliche Problem, daß das Wiedereinschalten zum vorgesehenen Zeitpunkt leicht vergessen wird.

Der Erfindung liegt deshalb die Aufgabe zugrunde, eine technische Lösung gegen das Vergessen des Wiedereinschaltens zu finden.

Diese Aufgabe wird erfindungsgemäß gelöst durch eine Umschalteinrichtung nach der Lehre des Anspruchs 1, einen Anrufbeantworter nach der Lehre des Anspruchs 5 und eine Faxweiche nach der Lehre des Anspruchs 7.

Gemäß der Erfindung wird also eine Möglichkeit vorgesehen, um das Wiedereinschalten vorzuprogrammieren.

Weitere Ausgestaltungen der Erfindung sind den Unteransprüchen und der nachfolgenden Beschreibung zu entnehmen.

Im folgenden wird die Erfindung unter Zuhilfenahme der beiliegenden Zeichnungen weiter erläutert:

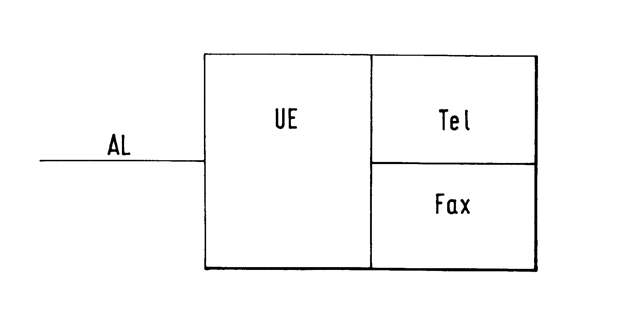

- Figur 1: zeigt eine erfindungsgemäße Umschalteinrichtung mit angeschlossenem Telephongerät und angeschlossenem Faxgerät; die Figur kann auch anders gedeutet werden.

Figur 1 zeigt eine erfindungsgemäße Umschalteinrichtung UE, die einerseits an einer Anchlußleitung AL angeschlossen ist und an der andererseits ein übliches Telephongerät Tel und ein übliches Faxgerät Fax angeschlossen sind. Unter "üblich" ist hier zu verstehen, daß keine erfindungsgemäße Ausgestaltung dieser Geräte vorgesehen ist. Inwieweit die Umschalteinrichtung UE, das Telephongerät Tel und das Faxgerät Fax voneinander getrennt oder miteinander vereint sind, spielt für die vorliegende Erfindung keine grundsätzliche Rolle. Eine Umschalteinrichtung UE wie in diesem Beispiel ist auch als Faxweiche bekannt. Ist anstelle des Faxgeräts Fax ein Anrufbeantworter vorhanden, so ändert sich grundsätzlich sonst nichts. Für dieses Anwendungsbeispiel ist deshalb keine separate Zeichnung vorgesehen.

In bekannten Anordnungen dieser Art ist nun in der Umschalteinrichtung UE ein Schalter angeordnet, mit dem ankommende Rufe für das Telephongerät unterdrückt werden können, womit dann unerwünschtes Klingeln unterdrückt wird. Erfindungsgemäß wird nun dieser Schalter so ausgestaltet, daß er so einstellbar ist, daß ab einer vorbestimmten Zeit ankommende Rufe nicht mehr unterdrückt werden.

Eine zumindest gedanklich einfache und auch in der Anwendung aus sich heraus verständliche Ausgestaltung ist die der Ausführung des Schalters als Zeitschaltuhr, bei der mit einem Drehschalter einerseits das Unterdrücken ankommender Rufe eingeleitet und andererseits die Zeit eingestellt wird, nach der diese Schaltuhr ablaufen und ankommende Rufe nicht mehr unterdrücken soll.

Da heutige Telekommunikationsgeräte ohnehin eine Programmsteuerung, Eingabetastatur und Anzeigemittel aufweisen, ist es naheliegend, dann auch diesen Schalter mit dieser Programmsteuerung programmierbar zu gestalten. Außer der Wiedereinschaltzeit kann dabei im Voraus auch die Ausschaltzeit einprogrammiert werden. Dies kann sowohl für einmalige als auch für regelmäßig wiederkehrende Zeiten erfolgen. Wie für andere vergleichbare Programmierungen kann dabei sowohl die Uhrzeit als auch das Datum oder der Wochentag als Kriterium dienen.

## Patentansprüche

1. Umschalteinrichtung(UE) zum Umschalten zwischen einem Telephongerät(Tel) und einem Zusatzgerät(Fax), mit einem Schalter zum Unterdrücken ankommender Rufe für das Telephongerät und damit zum Unterdrücken des Klingelns, **dadurch gekennzeichnet, daß** der Schalter derart einstellbar ist, daß ab einer vorbestimmten Zeit ankommende Rufe nicht mehr unterdrückt werden.

2. Umschalteinrichtung nach Anspruch 1, dadurch gekennzeichnet, daß der Schalter programmierbar ist.

3. Umschalteinrichtung nach Anspruch 2, dadurch gekennzeichnet, daß die Ein- und die Ausschaltzeit des Schalters programmierbar ist.

4. Umschalteinrichtung nach Anspruch 2, dadurch gekennzeichnet, daß der Schalter auf regelmäßig wiederkehrende Zeiten programmierbar ist.

5. Anrufbeantworter mit Anschluß für ein Telephongerät und mit eingebauter Umschalteinrichtung zum Umschalten zwischen dem Telephongerät und dem Anrufbeantworter , mit einem Schalter zum Unterdrücken ankommender Rufe für das Telephongerät und damit zum Unterdrücken des Klingelns, **dadurch gekennzeichnet, daß** der Schalter derart einstellbar ist, daß ab einer vorbestimmten Zeit ankommende Rufe nicht mehr unterdrückt werden.

6. Anrufbeantworter nach Anspruch 5, dadurch gekennzeichnet, daß einTelephongerät mit eingebaut ist.

7. Faxweiche(UE) mit Anschlüssen für ein Telephongerät(Tel) und für ein Faxgerät(Fax) und mit eingebauter Umschalteinrichtung zum Umschalten zwischen dem Telephongerät(Tel) und dem Faxgerät(Fax), mit einem Schalter zum Unterdrücken ankommender Rufe für das Telephongerät und damit zum Unterdrücken des Klingelns, **dadurch gekennzeichnet, daß** der Schalter derart einstellbar ist, daß ab einer vorbestimmten Zeit ankommende Rufe nicht mehr unterdrückt werden.

8. Faxweiche nach Anspruch 7, dadurch gekennzeichnet, daß ein Telephongerät oder ein Faxgerät oder beides mit eingebaut sind.
